# DEMANDE DE BREVET EUROPEEN

(11) **EP 3 828 827 A1**
(43) Date de publication de la demande: **02.06.2021**
(21) Numéro de dépôt: 19212215.8
(22) Date de dépôt: 28.11.2019
(51) Int. Cl.: G06T 7/292, G06T 7/70, H04N 5/232, H04N 7/18

(54) **SYSTEME DE SUPERVISION D'UNE COMPETITION SPORTIVE**

(71) Demandeur: Swiss Timing Ltd., 2606 Corgémont (CH)
(72) Inventeur: CHOFFAT, M. Frédéric, 2942 Alle (CH); GRASSO, Christophe, 2503 Bienne (CH); GUILLAUME, Sébastien, 1012 Lausanne (CH)
(74) Mandataire: ICB SA

(57) **Abrégé**

Le système de supervision (1) d'une compétition sportive comprenant deux théodolites (11, 12) placés autour ou sur un champ (2) ou un parcours de compétition. Au moins une caméra électronique (13, 14) est montée sur chaque théodolite pour suivre et visionner un objet en mouvement (3), et au moins une station de base (21) à unité de traitement des données reçues de chaque théodolite (11, 12) et de chaque caméra électronique pour la détermination d'une position ou d'une vitesse ou d'un temps de course de l'objet en mouvement durant la compétition. Au moins une image prise de la caméra permet de commander de manière automatique l'orientation des théodolites en direction d'un objet en mouvement en étant centré dans l'image fournie par la caméra par théodolite afin de suivre l'objet en mouvement durant la compétition.

## Description

### Domaine de l'invention

L'invention concerne un système de supervision d'une compétition sportive, telle qu'un concours hippique.

### Arrière-plan de l'invention

Habituellement pour superviser notamment un concours hippique, il est utilisé un module à transpondeur placé sur le cavalier ou le cheval et en communication avec une station informatique de base. Le port du module à transpondeur peut déranger le cavalier ou son placement sur le cheval. Les mesures durant la compétition peuvent aussi dépendre du bon emplacement du module à transpondeur sur le cavalier ou le cheval, ce qui peut conduire à des difficultés de mesure.

La demande de brevet FR 3 042 371 A1 décrit un procédé de visualisation d'une vidéo d'un cheval lors d'un concours hippique, avec en plus au moins une information déterminée à partir d'un flux de données collectées lors du parcours. La vidéo est réalisée par un appareil mobile, tel qu'un téléphone portable, qui comprend un système de prise de vue, un moyen de communication et une horloge définissant un premier repère temporel. Le flux de données collectées provient d'un dispositif électronique placé sur la selle du cheval. Le dispositif électronique comprend au moins un capteur et un système de décompte du temps définissant un deuxième repère temporel. Le dispositif électronique comprend un moyen de communication compatible avec le moyen de communication de l'appareil mobil. Une synchronisation des premier et second repères temporels est réalisée. Cependant, cela ne permet pas de suivre de manière précise l'objet en mouvement, tel que le cheval et d'effectuer différentes mesures, ou d'avoir des repères bien définis pour le contrôle de chaque cheval durant une compétition.

Le brevet US 8,723,956 B2 décrit un système de contrôle automatisé par caméras d'une compétition sportive, telle qu'une course de chevaux sur un tracé ou une course de véhicules motorisés. Plusieurs caméras sont disposées le long du tracé et contrôlées par un opérateur. Dans le cas présent uniquement des caméras sont utilisées pour la détermination de temps et de positions. Cependant, cela ne permet pas de suivre de manière précise l'objet en mouvement, tel que le cheval ou le véhicule sur le tracé et d'effectuer différentes mesures précises, ou d'avoir des repères bien définis pour le contrôle de chaque cheval ou véhicule durant une compétition.

### Résumé de l'invention

L'invention a donc pour but de pallier les inconvénients de l'état de la technique susmentionné en proposant un système de supervision d'une compétition sportive permettant de suivre en continu et de manière automatique le déroulement de la compétition sportive tout en déterminant plusieurs paramètres ou mesures de la compétition susceptibles d'être visionnés par des spectateurs de la compétition.

A cet effet, l'invention concerne un système de supervision d'une compétition sportive, qui comprend les caractéristiques définies dans la revendication indépendante 1.

Des formes d'exécution particulières du système de supervision d'une compétition sportive sont définies dans les revendications dépendantes 2 à 11.

Un avantage du système de supervision réside dans le fait qu'il utilise au moins deux théodolites pour fournir des informations en direct à une station de base à unité de traitement, concernant le positionnement et le suivi des données d'un compétiteur ou d'un cheval avec son cavalier d'un concours hippique ou d'un véhicule motorisé ou non lors de la compétition. Ces données sont utilisées par exemple pour mesurer le temps intermédiaire à chaque obstacle, faire une comparaison de trajectoire, montrer la vitesse réelle, calculer la distance réelle parcourue, la vitesse moyenne, le nombre de pas du compétiteur ou le nombre de foulées du cheval du compétiteur, le temps de vol, la longueur et la hauteur des sauts ainsi que la détection des défauts d'un obstacle. Ces données sont utilisées pour rendre la compétition plus attractive, elles peuvent être utilisées pour des graphiques de télévision, sur un tableau d'affichage public, un flux Internet, une analyse de liste de résultats.

Avantageusement, chaque théodolite est lié respectivement à au moins une caméra électronique. De préférence, chaque théodolite est équipé de deux caméras électroniques. Une caméra coaxiale par exemple à champ de vision de 1°, est fixée derrière l'objectif du théodolite et une caméra de surveillance ou de vue d'ensemble est placée sur le théodolite. Cette caméra de vue d'ensemble peut être montée avec différents objectifs en fonction de la position du théodolite. Au moins un logiciel de conduite traite l'image de la caméra choisie en fonction de la distance entre la cible et le théodolite. Dans le cas d'une course hippique, chaque théodolite doit suivre automatiquement le cheval sur le terrain. Grâce à au moins une des caméras sur chaque théodolite, une détection de position du cheval dans l'image est envoyée à la station informatique de base, qui est munie d'un logiciel dédicacé. Ainsi sur commande de la station informatique de base, chaque théodolite est orienté pour garder le cheval dans l'image durant la compétition. Cela permet d'avoir toujours des mesures notamment d'angles des théodolites très précises pour la détermination de tous les paramètres à détecter durant la compétition.

Avantageusement, cette analyse d'image vidéo dans la station informatique de base est également capable de donner le nombre de foulées dans le cas d'un cheval, le saut en hauteur et la longueur, le temps de vol et la détection des fautes sur l'obstacle à franchir. L'analyse d'image permet d'améliorer la mesure de position du cheval à suivre. L'angle mesuré par chaque théodolite et la position du cheval dans l'image à partir des deux théodolites sont utilisés pour calculer la position tridimensionnelle avec une haute précision avec des mesures d'angles par triangulation.

Avantageusement, cette solution avec les théodolites est non-invasive, car elle est sans marqueur, les compétiteurs et les chevaux ne sont pas du tout perturbés par ce type de supervision. C'est également un grand avantage en termes de logistique. Dans le système de supervision, il y a une reconnaissance basée sur l'image pour localiser le cheval et positionner en conséquence les théodolites pointant vers les chevaux. Ceci permet d'obtenir une haute précision de position fournie par les théodolites sans intervention humaine manuelle. Ce système de supervision d'une compétition sportive peut s'appliquer à différents sports, tels qu'une course automobile ou de motos ou de vélos, une épreuve à ski ou en surf, un saut à ski, une épreuve d'aviron ou de canoé ou d'autres sports.

Avantageusement avec l'ensemble combiné des deux théodolites calibrés et des caméras disposées sur chaque théodolite, il n'est pas nécessaire d'utiliser un positionnement par satellites GPS ou GNSS. Cela simplifie toutes les mesures et n'est pas dépendant de tout obstacle réduisant la captation des signaux GPS.

### Brève description des dessins

Les buts, avantages et caractéristiques du système de supervision d'une compétition sportive selon l'invention apparaîtront mieux dans la description suivante d'au moins une forme d'exécution non limitative illustrée par les dessins sur lesquels :
la figure 1 représente de manière simplifiée une première forme d'exécution d'un système de supervision d'une compétition sportive avec deux théodolites autour d'un champ de course selon l'invention,
la figure 2 représente une seconde forme d'exécution plus détaillée d'un système de supervision d'une compétition sportive avec deux théodolites autour d'un champ de course selon l'invention, et
la figure 3 représente une troisième forme d'exécution plus détaillée d'un système de supervision d'une compétition sportive avec deux théodolites autour d'un champ de course selon l'invention.

### Description détaillée de l'invention

Dans la description suivante, tous les éléments d'un système de supervision d'une compétition sportive, telle qu'un concours hippique ou un autre sport, qui sont bien connus de l'homme du métier dans ce domaine technique, ne seront relatés que de manière simplifiée.

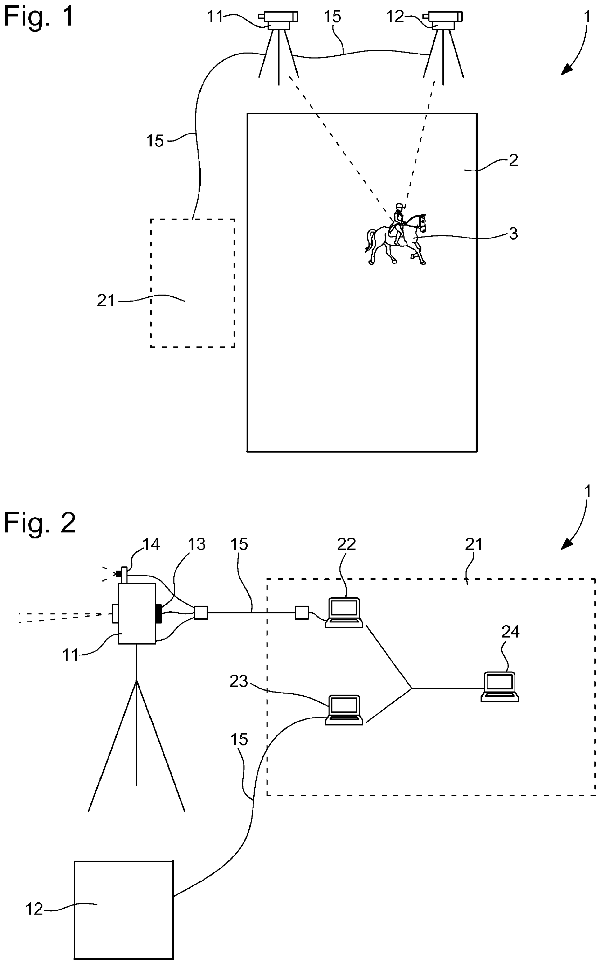

La figure 1 représente schématiquement une forme d'exécution d'un système de supervision 1 d'une compétition sportive. Dans le cas présent, il n'est décrit que ce qui concerne un concours hippique même si le système de supervision 1 peut être utilisé selon un même principe pour d'autres sports, tels qu'une course à pieds, ou une course de natation en bassin, ou pour des plongeons en bassin, ou une course automobile ou de motos ou de vélos, ou une épreuve à ski ou en surf, ou un saut à ski, ou une épreuve d'aviron ou de canoé par exemple.

Le système de supervision 1 comprend notamment un premier théodolite 11 de type électronique et un second théodolite 12 de type électronique, qui sont disposés dans des positions bien définies autour ou sur une aire extérieure ou en salle ou un champ 2 pour la supervision du concours hippique. Le système de supervision 1 comprend encore au moins une caméra électronique, non représentée, liée à chaque théodolite 11, 12 respectif pour suivre et visionner un objet en mouvement 3, qui est dans ce cas de figure un cheval 3 avec son cavalier sur le champ 2 durant la compétition sportive. De plus, le système de supervision 1 comprend une station de base 21 à unité de traitement, notamment une station informatique de base, qui est agencée pour recevoir les données de mesures, qui sont transmises par les théodolites 11, 12 et les caméras électroniques. La station informatique de base 21 permet de déterminer certains paramètres de mesures de la compétition sportive, notamment de déterminer une position et/ou une vitesse et/ou un temps de course de l'objet en mouvement 3, c'est-à-dire du cheval avec son cavalier durant la compétition.

Chaque caméra électronique est de préférence montée directement sur un des théodolites respectifs 11, 12. Chaque caméra électronique fournit des informations, notamment des images du cheval 3 en mouvement, à la station informatique de base 21 pour permettre de commander de manière automatique l'orientation des théodolites 11, 12 en direction du cheval 3 en mouvement. Le cheval 3 dans l'image de chaque caméra électronique doit rester de préférence centré dans l'image afin de bien orienter chaque théodolite 11, 12 en direction du cheval 3 à suivre durant la compétition.

Il est à noter que chaque théodolite 11, 12 permet de mesurer des angles dans les deux plans horizontaux et verticaux afin de déterminer une direction. Ces théodolites 11, 12 sont utilisés durant la compétition pour réaliser les mesures d'une triangulation, c'est-à-dire des angles d'un triangle pour déterminer notamment une position tridimensionnelle et une vitesse du cheval par triangulation.

Avant le début de la compétition sportive, un procédé d'étalonnage ou calibration de chaque théodolite 11, 12 est effectué. Par la suite, il y a encore une calibration de la ou des caméras sur chaque théodolite 11, 12 au point de référence mesuré pour avoir une correspondance angle et pixel. Une fois le procédé d'étalonnage effectué, chaque théodolite 11, 12 peut mesurer la même position de référence en liaison à l'objet à suivre pendant la compétition.

Le système de supervision 1 comprend de préférence une première caméra électronique coaxiale et une seconde caméra électronique de vue d'ensemble, qui sont montées directement sur chaque théodolite 11, 12 respectif. Comme représenté à la figure 2, une première caméra électronique coaxiale 13 est de préférence placée derrière un objectif du premier théodolite 11. Une seconde caméra électronique de vue d'ensemble 14 est placée sur une structure extérieure du premier théodolite 11, de préférence sur le dessus de la partie mobile pour avoir une vue d'ensemble dans une même direction que la première caméra électronique coaxiale 13. Cette seconde caméra électronique de vue d'ensemble 14 peut être montée avec différents objectifs en fonction de la position du théodolite.

Un même agencement non représenté d'une première caméra électronique coaxiale et d'une seconde caméra électronique de vue d'ensemble est prévu sur le second théodolite 12.

La station informatique de base 21 comprend une première unité informatique 22 reliée au premier théodolite 11 pour le contrôle du premier théodolite et une seconde unité informatique 23 reliée au second théodolite 12 pour le contrôle du second théodolite. La station informatique de base 21 comprend en outre une unité informatique de calcul 24 reliée aux première et seconde unités informatiques 22, 23 pour effectuer les calculs notamment de position et/ou de vitesse et/ou de temps de course de l'objet en mouvement, qui est le cheval durant la compétition. Cette unité informatique de calcul 24 est synchronisée pour effectuer tous les calculs. Normalement l'unité informatique de calcul 24 est prévue pour effectuer les différents calculs de paramètres de course sur la base d'informations transmises par les théodolites 11, 12 et leurs caméras électroniques 13, 14 au moyen d'algorithmes dédicacés et mémorisés dans au moins une des unités informatiques 22, 23, 24.

La première unité informatique 22 de contrôle reçoit des signaux de commande de l'unité informatique de calcul 24 pour le contrôle du premier théodolite 11, c'est-à-dire pour l'orienter en fonction de la position du cheval dans l'image prise par les caméras. La seconde unité informatique 23 de contrôle reçoit des signaux de commande de l'unité informatique de calcul 24 pour le contrôle du second théodolite 12, c'est-à-dire pour l'orienter en fonction de la position du cheval dans l'image prise par les caméras.

Il est à noter encore que le cheval est souvent caché partiellement par les obstacles ou une autre décoration sur le parcours de sauts d'obstacles. La taille du cheval est toujours plus petite que l'image prise par la seconde caméra de vue d'ensemble 14, mais par contre pas sur la première caméra coaxiale 13. Sur la première caméra de vue d'ensemble 14, le cheval peut prendre presque la moitié de l'image quand il est dans une position la plus proche du théodolite 11, 12 et moins de 10% quand il est dans une position la plus éloignée du théodolite 11, 12.

Dans la station informatique de base 21, qui est reliée de préférence par une liaison par fibre optique 15 ou câblée (Liaison Ethernet) à chaque théodolite 11, 12 et aux caméras 13, 14, il y a un traitement de chaque image reçue par les caméras 13, 14 des deux théodolites 11, 12. Il est défini les coordonnées (en pixels) du point suivi sur l'image de chaque caméra de vue d'ensemble 14. De plus, il peut être prévu d'affiner cette position de l'image par chaque caméra coaxiale 13. Une détermination du nombre de pas entre les sauts et le temps de vol du cheval pour sauter chaque obstacle peut aussi être prévue.

Le système de supervision 1 doit être en mesure de fonctionner en temps réel et sans retard pour la compétition sportive. Une fois mis en fonction pour la compétition, il doit fonctionner de manière automatique ou autonome sans devoir nécessiter l'intervention d'un opérateur. Il peut être attendu une précision de la position du suivi du cheval de l'ordre de ± 0.2 m, de la précision de longueur de chaque saut de l'ordre de ± 0.05 m, de la précision du temps de vol de l'ordre de ± 10 ms et de la précision du nombre de pas optimale sans pas raté.

Toutes les mesures traitées dans la station informatique de base 21, c'est-à-dire différents résultats du cheval en compétition, peuvent être affichées sur un dispositif d'affichage non représenté. Toutes les mesures affichées peuvent ainsi être visionnées par un spectateur autour du champ du concours hippique, voire à la télévision par une retransmission télévisuelle traditionnelle.

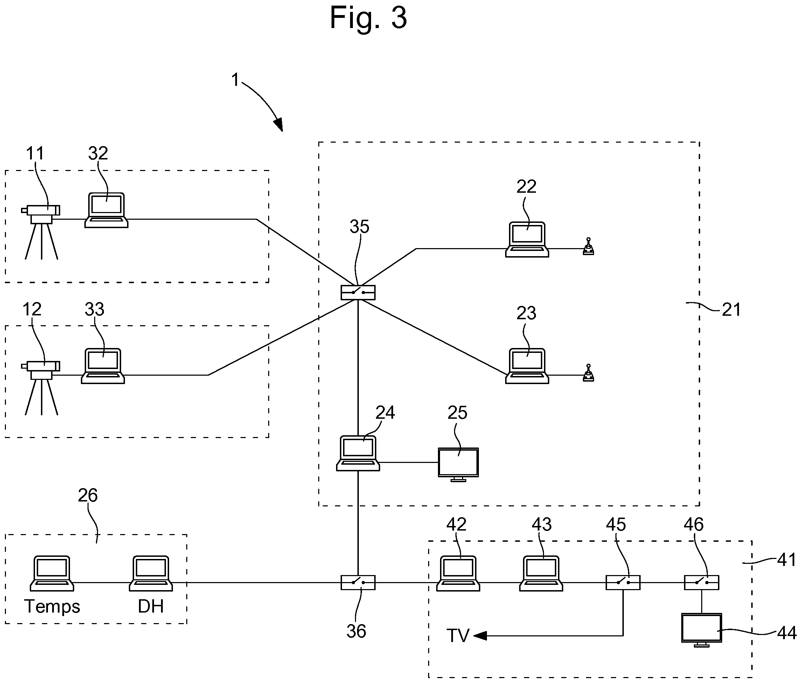

La figure 3 représente une autre forme d'exécution plus détaillée d'un système de supervision 1 d'une compétition sportive avec deux théodolites 11, 12 autour d'un champ de course. Le premier théodolite 11 avec sa caméra coaxiale et sa caméra de vue d'ensemble sont reliés directement à une première unité informatique de proximité 32 pour assurer un meilleur suivi de la compétition sportive. Le second théodolite 12 avec sa caméra coaxiale et sa caméra de vue d'ensemble sont reliés directement à une seconde unité informatique de proximité 33 pour assurer un meilleur suivi de la compétition sportive. Les deux unités informatiques de proximité 32, 33 sont reliées à la station informatique de base 21. Dans la station informatique de base 21, les signaux provenant de la première unité informatique de proximité 32 sont fournis à la première unité informatique 22 de contrôle par l'intermédiaire d'un multiplexeur ou commutateur de base 35. Les signaux provenant de la seconde unité informatique de proximité 33 sont fournis à la seconde unité informatique 23 de contrôle par l'intermédiaire du multiplexeur ou commutateur de base 35. Les opérations de calcul sont effectuées dans l'unité informatique de calcul 24, qui est reliée à un premier dispositif d'affichage local 25.

Normalement les première et seconde unités informatiques 22, 23 de contrôle fournissent une commande aux première et seconde unités informatiques de proximité 32, 33 pour l'orientation de chaque théodolite 11, 12. La première unité informatique de proximité 32 et la seconde unité informatique de proximité 33 fournissent des signaux de mesures ou reçoivent des signaux de commande en alternance en étant reliées par fibre ou Ethernet aux première et seconde unités informatiques 22, 23 de contrôle.

Le système de supervision 1 comprend encore une unité principale de chronométrage 26, dans laquelle est placée une unité de traitement (DH) des résultats ou données. Cette unité principale de chronométrage 26 est reliée à l'unité informatique de calcul 24 de la station informatique de base 21 par l'intermédiaire d'un commutateur de réseau 36. Une unité d'affichage et de contrôle 41 de dispositifs d'affichage est reliée à l'unité principale de chronométrage 26 et à l'unité informatique de calcul 24 de la station informatique de base 21 par l'intermédiaire du commutateur de réseau 36. Dans l'unité d'affichage et de contrôle 41, il peut y avoir un dispositif de commande télévisuel 42, un écran de visualisation local 43 par exemple autour du champ de la compétition, un dispositif d'affichage standard 44, un connecteur télévisuel 45 et un enregistreur de télévision 46. Sur différents types de dispositifs d'affichage, il est ainsi possible de visionner des résultats de la compétition sportive en direct ou en différé.

Différents logiciels dédicacés sont prévus pour assurer la supervision de la compétition sportive. Ces logiciels ou algorithmes sont mémorisés dans l'une ou l'autre des unités informatiques.

A partir de la description qui vient d'être faite, plusieurs variantes du système de supervision d'une compétition sportive. Il peut être prévu de relier chaque théodolite et caméra à la station informatique de base par une liaison sans fil.

## Revendications

1. Système de supervision (1) d'une compétition sportive comprenant au moins deux théodolites (11, 12) placés autour ou sur un champ (2) ou un parcours de compétition, chaque théodolite étant lié chacun respectivement à au moins une caméra électronique (13, 14) pour suivre et visionner un objet en mouvement (3), tel qu'un compétiteur ou un cheval avec son cavalier d'un concours hippique ou un véhicule motorisé ou non, et au moins une station de base (21) à unité de traitement des données reçues de chaque théodolite (11, 12) et de chaque caméra électronique pour la détermination d'une position ou d'une vitesse ou d'un temps de course de l'objet en mouvement durant la compétition.

2. Système de supervision (1) selon la revendication 1, **caractérisé en ce que** chaque caméra électronique est montée directement sur un des théodolites respectifs (11, 12), tout en étant initialement calibrés ou étalonnés pour mesurer une même position de référence en liaison à l'objet à suivre pendant la compétition, et **en ce que** chaque caméra fournit des informations à la station informatique de base (21) pour permettre de commander, suite à la détection automatique d'un objet à suivre sur l'image, l'orientation des théodolites en direction de l'objet en mouvement centré dans l'image et pour suivre l'objet en mouvement durant la compétition.

3. Système de supervision (1) selon l'une des revendications 1 et 2, **caractérisé en ce qu'**une première caméra électronique coaxiale (13) et une seconde caméra électronique de vue d'ensemble (14) sont montées directement sur chaque théodolite (11, 12).

4. Système de supervision (1) selon la revendication 1, **caractérisé en ce que** l'agencement des deux théodolites combinés avec les caméras électroniques permettent de déterminer un positionnement tridimensionnel.

5. Système de supervision (1) selon la revendication 3, **caractérisé en ce que** chaque caméra électronique coaxiale (13) est placée derrière un objectif du théodolite respectif, et **en ce que** chaque caméra électronique de vue d'ensemble (14) est placée sur une structure extérieure du théodolite respectif.

6. Système de supervision (1) selon la revendication 3, **caractérisé en ce que** chaque théodolite (11, 12) est connecté par fibre optique ou câble (15) ou Ethernet à la station informatique de base (21).

7. Système de supervision (1) selon la revendication 3, **caractérisé en ce que** chaque théodolite (11, 12) comprend une unité informatique (32, 33) en liaison avec la première caméra électronique coaxiale (13) et la seconde caméra électronique de vue d'ensemble (14) pour le traitement des angles mesurés par le théodolite et les images fournies par les caméras (13, 14) avant une transmission à la station informatique de base (21).

8. Système de supervision (1) selon la revendication 3, **caractérisé en ce que** la station informatique de base (21) comprend une première unité informatique (22) reliée au premier théodolite (11) pour le contrôle du premier théodolite et une seconde unité informatique (23) reliée au second théodolite (12) pour le contrôle du second théodolite, et **en ce que** la station informatique de base (21) comprend en outre une unité informatique de calcul (24) reliée aux première et seconde unités informatiques pour effectuer les calculs notamment de position et/ou de vitesse et/ou de temps de course de l'objet en mouvement durant la compétition.

9. Système de supervision (1) selon la revendication 3, **caractérisé en ce que** la station informatique de base (21) comprend une unité informatique de calcul (24) pour effectuer les calculs notamment de position et/ou de vitesse et/ou de temps de course de l'objet en mouvement durant la compétition et transmettre des résultats à afficher sur un ou plusieurs dispositifs d'affichage (26, 41) en direct ou en différé.

10. Système de supervision (1) selon la revendication 3, **caractérisé en ce que** la station informatique de base (21) comprend plusieurs unités informatiques (22, 23, 24) pour le contrôle de chaque théodolite et chaque caméra et pour effectuer les différents calculs de paramètres de course sur la base d'informations transmises par les théodolites (11, 12) et les caméras électroniques (13, 14) au moyen d'algorithmes dédicacés et mémorisés dans au moins une des unités informatiques (22, 23, 24).

11. Système de supervision (1) selon l'une des revendications 3 et 10, pour une compétition équestre avec l'objet en mouvement, qui est un cheval (3) avec son cavalier, **caractérisé en ce que** la station informatique de base (21) comprend plusieurs unités informatiques (22, 23, 24) pour recevoir des informations de mesures des théodolites (11, 12) et des caméras électroniques (13, 14) pour mesurer un temps intermédiaire à chaque obstacle du cheval, pour faire une comparaison de trajectoire, pour montrer une vitesse réelle, pour calculer une distance réelle parcourue, une vitesse moyenne, un nombre de foulées du cheval, un temps de vol, une longueur et une hauteur des sauts ainsi qu'une détection des défauts de l'obstacle, et **en ce que** toutes les données calculées sont susceptibles d'être transmises à des dispositifs d'affichage pour être visionnées par des spectateurs.
